# EUROPÄISCHE PATENTSCHRIFT

(11) **EP 0 643 341 B1**
(45) Veröffentlichungstag und Bekanntmachung des Hinweises auf die Patenterteilung: **18.03.1998**
(21) Anmeldenummer: 94111019.9
(22) Anmeldetag: 15.07.1994
(51) Int. Cl.: G05B 19/401, B23Q 35/121, G01B 21/20

(54) **Bezugspunkt-Setzverfahren bei Mehr-Koordinaten-Messmaschinen**
Reference point setting method on a coordinate measuring machine
Méthode d'ajustement d'un point de référence sur machine de mesure de coordonnées

(30) Priorität: 09.09.1993 DE 4330532
(43) Veröffentlichungstag der Anmeldung: 15.03.1995
(73) Patentinhaber: Dr. Johannes Heidenhain GmbH, D-83292 Traunreut (DE)
(72) Erfinder: Stettner, Rudolf, Ing.-grad., D-83308 Trostberg (DE)

(56) Entgegenhaltungen:
- EP-B- 0 156 918
- US-A- 4 815 006
- PATENT ABSTRACTS OF JAPAN vol. 007 no. 044 (M-195) ,22.Februar 1983 & JP-A-57 194857 (MITSUBISHI DENKI KK) 30.November 1982,

## Beschreibung

Die Erfindung bezieht sich auf ein Verfahren zum Setzen eines Bezugspunktes eines Meßtasters.

Mehrkoordinaten-Tastsysteme werden zum Messen von Prüflingen bei Koordinaten-Meßmaschinen, aber auch bei Werkzeugmaschinen eingesetzt, denn ausgehend von der Ähnlichkeit im mechanischen Aufbau und in der Kinematik zwischen numerisch gesteuerten Werkzeugmaschinen und Mehr-Koordinaten-Meßgeräten liegt es nahe, die Funktion einer Werkzeugmaschine im Hinblick auf eine Werkstückvermessung zu erweitern. Zunächst ist dazu ein geeignetes 3-D-Tastsystem sowohl mechanisch als auch signaltechnisch an die Werkzeugmaschine zu adaptieren. Das Tastsystem wird anstelle eines Werkzeuges im Werkzeug-Wechselmagazin abgelegt, wie ein Werkzeug eingewechselt und positioniert. Nach signaltechnischer Verknüpfung mit den Wegmeßsystemen der Maschine kann dann die Bearbeitungsmaschine prinzipiell als Koordinaten-Meßmaschine benutzt werden.Das Koordinatensystem der Werkzeugmaschine als räumliche Bezugsbasis in Verbindung mit den Wegmeßsystemen und einem elektronischen 3-D-Tastsystem ermöglicht ein räumliches Messen. Die Werkzeugmaschine wird jedoch erst dann für eine räumliche Werkstückvermessung geeignet, wenn es gelingt, die systematischen geometrischen Fehler der räumlichen Bezugsbasis - im wesentlichen Führungsfehler der Maschine - und die systematischen Fehler der Maßverkörperung zu erfassen und bei der Messung zu kompensieren. Dazu werden die genannten Eigenfehler der Maschine mit geeigneten Vergleichsmeßsystemen - z.B. Laserinterferometer - bestimmt und in Form einer Korrekturmatrix in einer funktional erweiterten Steuerung abgespeichert. Jedes im Augenblick einer Antastung von den Wegmeßsystemen übernommene Koordinatentripel wird dann mit den abgespeicherten Korrekturwerten verarbeitet. Aufgabe einer in die Steuerung integrierten bzw. an die Steuerung adaptierten Rechnereinheit ist darüber hinaus die Verarbeitung der Antastkoordinaten zu den Istabmessungen des Werkstückes, die Berechnung der Soll-/Istabweichungen, deren Ausgabe und Dokumentation auf Peripheriegeräten und in der letzten Ausbaustufe die Berechnung und Übergabe korrigierter NC-Daten für eine Kompensation von Bearbeitungsfehlern (siehe auch VDI Nachrichten Nr. 7/12. Februar 1982, Seiten 10 und 11).

Zur Ermittlung der korrigierten NC-Daten gehört demgemäß auch die Berücksichtigung der Parameter des 3-D-Tastsystemes.

Wesentliches Merkmal der hier betrachteten elektronischen Tastsysteme ist ein federnd gelagerter Taststift, der um einen bestimmten Betrag ausgelenkt werden kann. Kann die Auslenkung der Tastkugel für jede Position innerhalb des Taststifthubes erfaßt werden, so spricht man von messenden Tastsystemen. Sie sind mit Wegmeßsystemen zur Bestimmung der Taststiftauslenkung ausgestattet.

Nach jeder Inbetriebnahme und jedem Taststift-Wechsel muß eine Kalibrierung erfolgen, da aufgrund der Tastsystem-Mechanik die Antastkräfte in den verschiedenen Koordinaten-Richtungen unterschiedlich sind, so daß die Taststift-Länge und seine Verbiegung beim Antastvorgang ausgeglichen werden müssen. Insbesondere machen unterschiedliche Federraten sowie Reibungshysterese bei Aufnahme einer Messung eine Kalibrierung erforderlich. Dazu ist es notwendig, daß der Taststift frei ist, also nicht an einer Kontur anliegt und ausgelenkt ist, um einen Bezugspunkt setzen zu können.

In der EP-A-0 156 918 - von der unsere Erfindung ausgeht - ist ein Verfahren zum Setzen eines Bezugspunktes bei einem messenden Tastsystem beschrieben. Dabei wird die Auslenkung des Taststiftes im nicht angetasteten Zustand ermittelt und dieser Wert als Bezugspunkt übernommen. Ein ähnliches Verfahren ist aus der JP-A-57-194857 bekannt.

Bei den bekannten Verfahren wird vorausgesetzt, daß der Taststift während des Setzens eines Bezugspunktes kein Objekt antastet.

Der Erfindung liegt die Aufgabe zugrunde, ein Verfahren anzugeben, welches das Bezugspunktsetzen erleichtert und dessen Ergebnisse verbessert.

Diese Aufgabe wird durch ein Verfahren gemäß Anspruch 1 gelöst.

Durch die Merkmale der Ansprüche 2 bis 6 wird die Erfindung in vorteilhafter Weise ausgestaltet.

Mit Hilfe der Zeichnungen wird die Erfindung anhand eine Ausführungsbeispieles noch näher erläutert.

Es zeigt
- Figur 1: eine Dreikoordinaten-Meßmaschine,

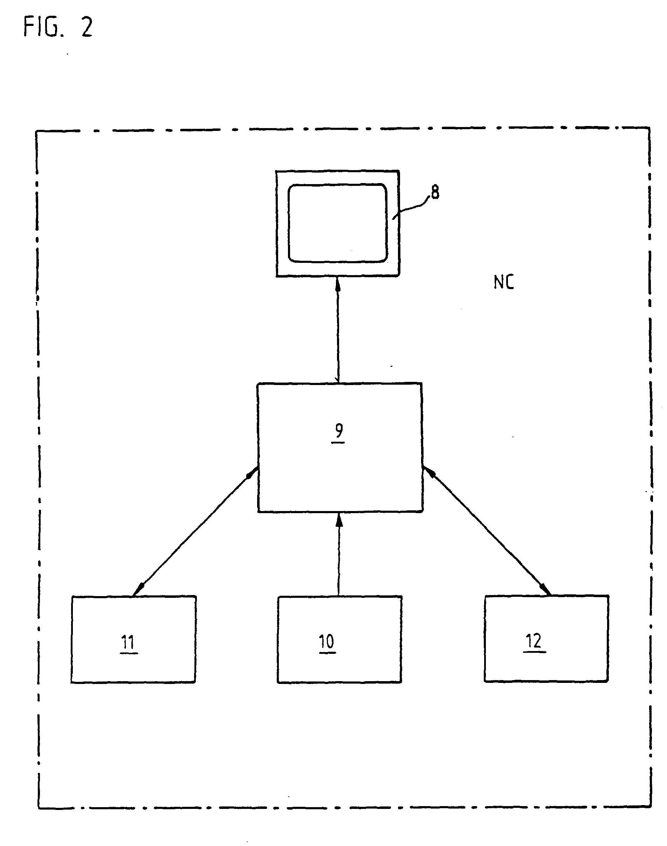

- Figur 2: eine NC-Steuerung zur Durchführung des Verfahrens.

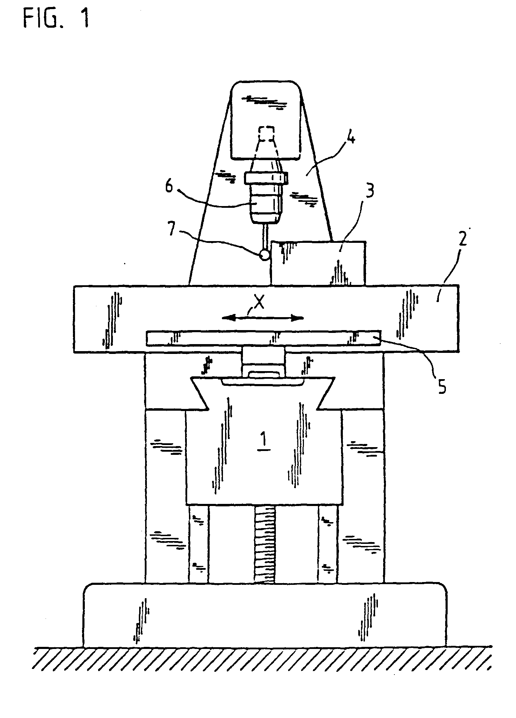

In Figur 1 ist eine Dreikoordinaten-Meßmaschine 1 mit einem Tisch 2 zur Aufnahme eines Prüfobjektes 3 dargestellt, der in drei orthogonalen Maschinenachsen auf einem Maschinenständer 4 verschiebbar ist. Zur Messung der Verschiebung des Tisches 2 mit dem Prüfobjekt 3 sind Längenmeßeinrichtungen 5 an der Dreikoordinaten-Meßmaschine 1 vorgesehen. Zum Antasten von Flächen des Prüfobjektes 3 ist am Maschinenständer 4 ein in drei Maschinenachsen wirkendes Mehrkoordinaten-Tastsystem 6 - im folgenden Meßtaster 6 genannt - befestigt.

Im Meßtaster 6 ist der Bezugspunkt vor einem Meßzyklus von der Ruhelage des Meßtasters abhängig. Wenn ein Taststift 7 eingesetzt wird, der ein anderes Gewicht hat als der vorherige, ergibt sich eine andere Lage des Bezugspunktes. Durch Zurücksetzen des Bezugspunktes wird der neue Bezugspunkt definiert.

Das Setzen des Bezugspunktes ist ein sehr wichtiger Schritt, der jedesmal durchgeführt werden muß, wenn die Arbeitsbedingungen des Meßtasters 6 wechseln. Das Setzen des Bezugspunktes muß wenigstens jedesmal nach einem der folgenden Ereignisse durchgeführt werden:
Der Meßtaster 6 wurde eingeschaltet;
der Meßtaster 6 wurde anders angebaut. Die beweglichen Teile des Meßtasters 6 verändern aufgrund der Schwerkraft ihre Position, womit auch die Nullage wechselt;
der Taststift 7 wurde ausgewechselt. Durch den Unterschied im Gewicht ergibt sich eine andere Nullage des Meßtasters 6.

An die Dreikoordinaten-Meßmaschine 1 ist eine numerische Steuerung NC adaptiert, die über einen Bildschirm 8, eine Zentraleinheit 9, eine Eingabevorrichtung 10 sowie über einen Programmspeicher 11 und einen Datenspeicher 12 verfügt.

Nach dem Inbetriebsetzen der Dreikoordinaten-Meßmaschine 1 ist für die numerische Steuerung NC nicht erkenntlich, ob eine Antastung vorliegt.

Die numerische Steuerung NC veranlaßt nun die automatische Durchführung des erfindungsgemäßen Verfahrens zum Setzen eines Bezugspunktes.

Dazu führt die Dreikoordinaten-Meßmaschine 1 eine räumliche Bewegung aus, die in allen drei Koordinatenrichtungen einen gewissen Betrag ausmacht. Diese räumliche Bewegung kann sehr gering sein, beispielsweise eine 3-D-Bewegung von 1 mm Länge.

Wenn sich aufgrund dieser Bewegung nun die am Bildschirm 8 der numerischen Steuerung NC angezeigten Meßwerte ändern, dann liegt der Taststift 7 tatsächlich am Prüfobjekt 3 an und die numerische Steuerung NC veranlaßt das Freifahren des Meßtasters 6 und setzt automatisch den Bezugspunkt des Meßtasters 6, sobald sich die Meßwerte nicht mehr ändern, denn dann ist sichergestellt, daß der Taststift 7 an keiner Fläche mehr anliegt.

Falls sich bei der anfänglichen 3-D-Bewegung bereits keiner der angezeigten Meßwerte ändert, so ist der Taststift 7 bereits frei und die numerische Steuerung NC setzt automatisch den Bezugspunkt des Meßtasters 6.

Nach jeder der Alternativen beendet die numerische Steuerung NC den Zyklus "Bezugspunkt setzen" und geht zum nächsten Programm-Zyklus über.

Gegebenenfalls kann dem Verfahren zum Setzen eines Bezugspunktes nach zufälliger Stromunterbrechung oder nach Aus- und Einschalten ein Eichvorgang vorangestellt werden.

Dieser besteht in einem Verfahren, das bei inkrementalen Meßsystemen an sich bekannt ist.

Nach dem Einschalten befindet sich das messende Tastsystem in einer zufälligen, unbekannten Position, und irgendwelche zufälligen Positionswerte werden angezeigt oder sind in der Steuerung gespeichert.

Um diese Position in Bezug auf einen Fixpunkt zu ermitteln, wird das Tastsystem in allen relevanten Koordinatenrichtungen über jeweils eine Referenzmarke gefahren. Durch die oder an der Referenzmarke wird der zufällig anstehende Meßwert genullt, also alle zugehörigen Speicher gelöscht. Dann wird das Tastsystem wieder in seine Ausgangslage zurückbewegt.

Dabei wird die Distanz von der Referenzmarke bis zur Ausgangslage gemessen und in einem beliebigen Speicher abgespeichert.

Diese Distanz ist eine Größe, die bei allen späteren Meßwerten mit eingerechnet wird, da sie die tatsächliche Lageabweichung des Tastsystemes von der die theoretische Null-Position des Tastsystemes repräsentierenden Referenzmarke darstellt.

Daher ist es vorteilhaft, diese Option grundsetzlich nach dem Einschalten der Mehr-Koordinaten-Meßeinrichtung zu nutzen.

## Patentansprüche

1. Verfahren zum Setzen eines Bezugspunktes bei messenden Tastsystemen (6), die mit numerischen Steuereinrichtungen (NC) in Mehr-Koordinaten-Meßeinrichtungen (1) eingesetzt werden, wobei bei dem Verfahren folgende Verfahrensschritte vorgenommen werden:
- der Zyklus "Bezugspunktsetzen" wird gestartet
- die Mehr-Koordinaten-Meßmaschine (1) führt mit dem Tastsystem (6) eine räumliche Bewegung durch
- die Meßwerte des Tastsystems (6) werden auf Veränderungen überprüft, wobei abhängig vom Überprüfungsergebnis das Tastsystem (6) automatisch genullt wird, indem in Abhängigkeit vom Überprüfungsergebnis alternativ zwei Verfahrensschritte erfolgen:
- a) verändern sich die Meßwerte nicht, wird das Tastsystem (6) automatisch genullt und der Zyklus "Bezugspunktsetzen" beendet;
- b) verändern sich die Meßwerte, veranlaßt die numerische Steuerung (NC) weitere Bewegungen des Tastsystems (6), bis sich dessen Meßwerte nicht mehr ändern, nullt dann automatisch das Tastsystem (6) und der Zyklus "Bezugspunktsetzen" wird beendet.

2. Verfahren nach Anspruch 1, dadurch gekennzeichnet, daß der Zyklus "Bezugspunktsetzen" automatisch vor jedem Meßzyklus gestartet wird.

3. Verfahren nach Anspruch 1, dadurch gekennzeichnet, daß der Zyklus "Bezugspunktsetzen" jederzeit manuell gestartet werden kann.

4. Verfahren nach Anspruch 1, dadurch gekennzeichnet, daß die Alternativen gemäß Anspruch 2 oder 3 frei wählbar sind.

5. Kalibrier-Verfahren nach Anspruch 1, dadurch gekennzeichnet, daß den Verfahrensschritten ein Eichvorgang vorangestellt ist.

6. Kalibrier-Verfahren nach Anspruch 5, dadurch gekennzeichnet, daß der Eichvorgang darin besteht, daß nach Stromunterbrechung
- wenigstens in einer Koordinate aus der Ausgangslage des messenden Tastsystemes eine Referenzmarke des Tastsystemes überfahren wird
- an der Referenzmarke ein zufälliger Meßwert gelöscht wird
- das Meßsystem in seine Ausgangslage zurückkehrt und
- die Distanz von der Referenzmarke bis zur Ausgangslage in einem beliebigen Speicher abgespeichert wird.

## Claims

1. A method of setting a reference point in measuring feeler systems (6) which are used with numerical control (NC) devices in multi-coordinate measuring devices (1), wherein the following method steps are performed in the method:
- the "set reference point" cycle is started
- the multi-coordinate measuring machine (1) carries out a spatial movement with the feeler system (6)
- the measured values of the feeler system (6) are tested for changes, the feeler system (6) being automatically zeroed in dependence on the test results, in that two alternative method steps are effected in dependence on the test results:
- a) if the measured values do not change, the feeler system (6) is automatically zeroed and the "set reference point" cycle is terminated;
- b) if the measured values do change, the numerical control (NC) causes further movements of the feeler system (6), until its measured values no longer change, then automatically zeroes the feeler system (6) and the "set reference point" cycle is terminated.

2. A method according to claim 1, characterized in that the "set reference point" cycle is automatically started before each measuring cycle.

3. A method according to claim 1, characterized in that the "set reference point" cycle can be started manually at any time.

4. A method according to claim 1, characterized in that the alternatives according to claims 2 and 3 are freely selectable.

5. A calibrating method according to claim 1, characterized in that the method steps are preceded by a calibration operation.

6. A calibrating method according to claim 5, characterized in that the calibration operation consists in that, after a current interruption
- a reference mark of the feeler system is traversed at least in one coordinate from the starting position of the measuring feeler system
- a measured value happening to occur at the reference mark is cleared
- the measuring system is returned to its starting position and
- the distance from the reference mark to the starting position is stored in an arbitrary memory.

## Revendications

1. Procédé de définition d'un point de référence sur des systèmes de palpage (6) mesurants utilisé en combinaison avec des dispositifs de commande numérique (NC) dans des dispositifs de mesure par multicoordonnées (1), procédé suivant lequel on opère selon les étapes suivantes :
- le cycle "définition du point de référence" est démarré,
- la machine de mesure par multicoordonnées (1) exécute avec le système de palpage (6) un mouvement dans l'espace,
- les valeurs de mesure du système de palpage (6) sont vérifiées quant à des variations, et en fonction du résultat de la vérification, le système de palpage (6) est automatiquement mis à zéro par le fait qu'en fonction du résultat de la vérification, l'une des deux étapes suivantes est effectuée :
- a) si les valeurs de mesure ne varient pas, le système de palpage (6) est mis automatiquement à zéro et le cycle "définition du point de référence" est arrêté,
- b) si les valeurs de mesure varient, la commande numérique (NC) déclenche d'autres mouvements du système de palpage (6) jusqu'à ce que les valeurs de mesure de ce dernier ne varient plus, puis le système de palpage (6) est automatiquement mis à zéro et le cycle "définition du point de référence" est arrêté.

2. Procédé suivant la revendication 1, caractérisé par le fait que le cycle "définition du point de référence" est démarré automatiquement avant chaque cycle de mesure.

3. Procédé suivant la revendication 1, caractérisé par le fait que le cycle "définition du point de référence" peut être démarré manuellement à tout moment.

4. Procédé suivant la revendication 1, caractérisé par le fait que les variantes suivant revendication 2 et revendication 3 peuvent être sélectionnées librement.

5. Procédé de calibrage suivant la revendication 1, caractérisé par le fait que les étapes du procédé sont précédées d'une opération d'étalonnage.

6. Procédé de calibrage suivant la revendication 5, caractérisé par le fait que l'opération d'étalonnage consiste en ce qu'après interruption du courant, une marque de référence du système de palpage est franchie suivant au moins un axe de déplacement à partir de la position de départ du système de palpage mesurant,
- une valeur de mesure aléatoire à l'endroit de la marque de référence est effacée,
- le système de mesure revient à sa position de départ, et
- la distance de la marque de référence jusqu'à la position de départ est mémorisée dans une mémoire quelconque.
